# EUROPÄISCHE PATENTSCHRIFT

(11) **EP 0 844 124 B1**
(45) Veröffentlichungstag und Bekanntmachung des Hinweises auf die Patenterteilung: **12.02.2003**
(21) Anmeldenummer: 97117541.9
(22) Anmeldetag: 10.10.1997
(51) Int. Cl.: B60J 7/14

(54) **Cabriolet-Fahrzeug**
Convertible vehicle.
Véhicule convertible.

(30) Priorität: 25.11.1996 DE 29620492 U
(43) Veröffentlichungstag der Anmeldung: 27.05.1998
(73) Patentinhaber: Wilhelm Karmann GmbH, D-49084 Osnabrück (DE)
(72) Erfinder: Rothe, Karl, 49565 Bramsche (DE)
(74) Vertreter: Busse & Busse Patentanwälte

(56) Entgegenhaltungen:
- US-A- 3 575 464

## Beschreibung

Die Erfindung betrifft ein Cabriolet-Fahrzeug gemäß dem Oberbegriff des Anspruches 1, dessen Dachkonstruktion ein in Öffnungsstellung verlagerbares Dachmittelteil aufweist.

Bei einem aus DE-3 816 060 C2 bekannten Cabriolet-Fahrzeug ist zwischen einem vorderen Windschutzscheibenrahmen und einem rückwärtigen Dachbereich ein als Dachschale ausgebildetes und im wesentlichen waagerecht in der Dachkontur verlaufendes Dachmittelteil vorgesehen. Der mit der Heckscheibe versehene rückwärtige Dachbereich ist dabei schwenkbeweglich im Seitenbereich der Fahrzeugkarosserie abgestützt und wird bei offener Fahrweise bis in eine unterhalb der Brüstungslinie des Fahrzeugs befindliche Öffnungsstellung abgesenkt, so daß der Fahrzeuginnenraum auch zum Heckbereich hin vollständig offen ist. In dieser Öffnungsstellung der Cabriolet-Dachteile sind zum Schutz des Fahrzeuginnenraums, beispielsweise gegen Fahrtwind, zusätzliche Windschutzbauteile erforderlich und für die Fahrzeuginsassen ist ein Überrollschutz auf die Stützwirkung des vorderen Windschutzscheibenrahmens beschränkt. Gemäß der gattungsbildenden US-A-3 575 464 ist der rückwärtige Dachbereich als ein auf die Karosserie auflegbares Dachschalenteil ausgebildet, das als integrierter Überrollbügel ausgebildet ist.

Der Erfindung liegt die Aufgabe zugrunde, ein Cabriolet-Fahrzeug der gattungsgemäßen Art zu schaffen, dessen Insassenschutz wesentlich verbessert ist.

Die Erfindung löst diese Aufgabe für ein Cabriolet-Fahrzeug mit einer Dachkonstruktion mit den Merkmalen des Anspruches 1. Hinsichtlich weiterer Ausgestaltungsmerkmale wird auf die Ansprüche 2 bis 9 verwiesen.

Das erfindungsgemäß ausgebildete Cabriolet-Fahrzeug weist mit dem auch in Dach-Öffnungsstellung oberhalb der Fahrzeugbrüstungslinie verbleibenden rückwärtigen Dachschalenteil einen Karosseriekontur auf, mittels der den Fahrzeuginsassen bei in Öffnungsstellung verlagertem Dachmittelteil sowohl der Fahrkomfort eines dachseitig offenen Fahrzeugs vermittelbar ist als auch für die Fahrzeuginsassen gleichzeitig eine Erhöhung der passiven Sicherheit im Fahrgastraum erreicht wird. Das obenliegende Dachschalenteil im Heckbereich des Fahrzeugs ist inbesondere bei einem Überrollunfall in seiner Wirkung als Schutzteil dadurch verbessert, daß in diese Baugruppe ein Überrollbügel integriert ist.

Das heckseitige Dachschalenteil begrenzt in Dach-Öffnungsstellung, beispielsweise gemeinsam mit den hochgestellten Seitenfensterteilen, den Fahrgastraum derart, daß ohne zusätzliche Schotts, Abweiser oder dgl. Bauteile ein weitgehend vom Fahrtwind unbeeinflußter Innenraum erreicht ist.

Durch den in das Dachschalenteil integrierten sowie karosseriefest abgestützten Überrollbügel wird das Dachschalenteil insgesamt ausgesteift und der Fahrzeuginnenraum durch dieses zusätzliche Sicherheitselement bei einem Überrollunfall zuverlässig geschützt.

In einer zweckmäßigen Ausführung ist das Dachschalenteil im Nahbereich zum Kofferraum über eine Schwenkbewegung ermöglichende Halteteile so mit der Fahrzeugkarosserie verbunden, daß das Dachschalenteil in eine die mittlere Dachöffnung vergrößernde Stellung hochschwenkbar ist und damit für eine automatische Bewegung des Dachmittelteils, beispielsweise bei dessen Verlagerung in eine Absenkstellung, ein vorteilhaft großer Bewegungsraum erreicht ist und der als Hard- oder Soft-Top vorgesehene Dachmittelteil ohne Beeinflussung des Fahrzeuginnenraumes frei bewegt werden kann.

Weitere Einzelheiten und Vorteile der Erfindung ergeben sich aus der nachfolgenden Beschreibung und den Zeichnungen, die ein Ausführungsbeispiel des erfindungsgemäßen Cabriolet-Fahrzeugs veranschaulichen. In der Zeichnung zeigen:
- Fig. 1: eine Seitenansicht eines erfindungsgemäßen Cabriolet-Fahrzeugs mit einer in Schließstellung befindlichen Dachkonstruktion,
- Fig. 2: eine perspektivische Heckansicht des Cabriolet-Fahrzeugs mit einem heckseitigen Dachschalenteil in einer Schwenkstellung,
- Fig. 3: eine Seitenansicht des Cabriolet-Fahrzeugs ähnlich Fig. 2 mit einem Dachmittelteil in einer ersten Öffnungsphase,
- Fig. 4: eine Seitenansicht ähnlich Fig. 3 mit dem Dachmittelteil in Absenkstellung hinter den Fahrzeugsitzen,
- Fig. 5: eine Seitenansicht ähnlich Fig. 4 mit dem Dachmittelteil in Absenkstellung und dem heckseitigen Dachschalenteil in Fahrtstellung,
- Fig. 6: eine vergrößerte Ausschnittsdarstellung des heckseitigen Dachschalenteils im Bereich einer dieses karosserieseitig abstützenden Scharnierhalterung,
- Fig. 7: eine vergrößerte Ausschnittsdarstellung einer das Dachschalenteil randseitig mit der Fahrzeugkarosserie verbindenden Rasthalterung,
- Fig. 8: eine Draufsicht der beiden Rasthalterungen mit einer Antriebsbaugruppe im Heckbereich des Fahrzeugs,
- Fig. 9: eine Schnittdarstellung im Bereich der Rasthalterung gemäß einer Linie IX - IX in Fig. 7,
- Fig. 10: eine Schnittdarstellung der Antriebsbaugruppe gemäß einer Linie X - X in Fig. 8,
- Fig. 11: eine Querschnittsdarstellung des heckseitigen Dachschalenteils mit dem integrierten Überrollbügel gemäß einer Linie XI - XI in Fig. 2, und
- Fig. 12: eine vergrößerte Ausschnittsdarstellung im Bereich der Rasthalterungen mit dem einen integrierten Überrollbügel aufweisenden Dachschalenteil.

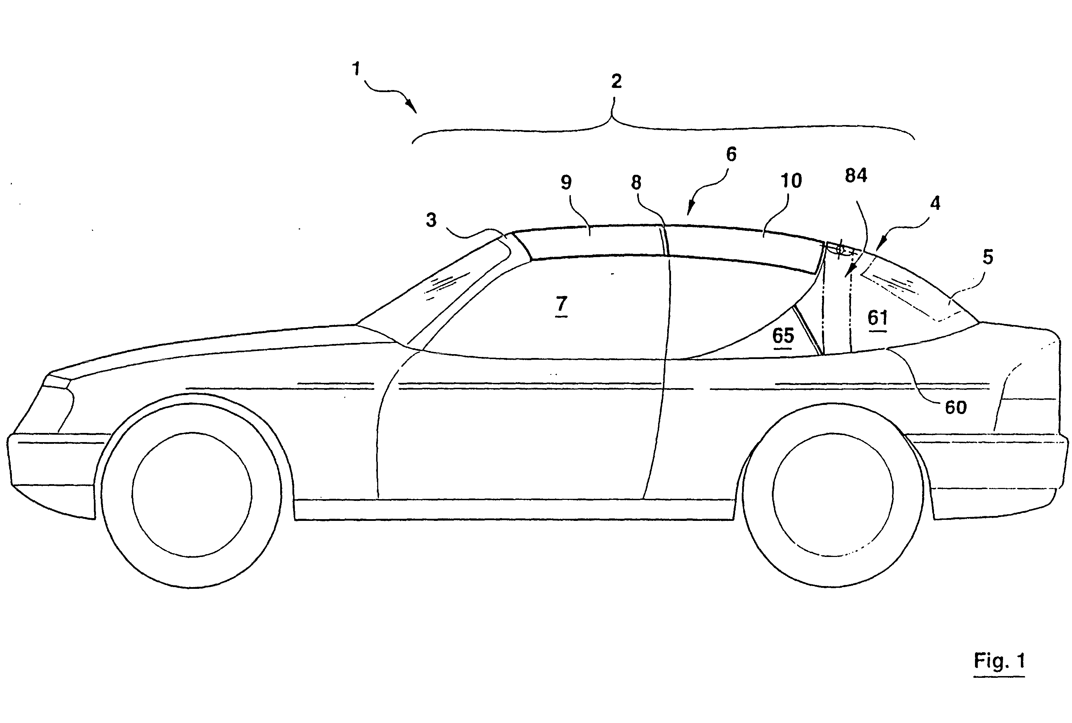

In Fig. 1 ist ein insgesamt mit 1 bezeichnetes Kraftfahrzeug in einer Seitenansicht dargestellt, dessen Dach 2 nach Art eines Cabriolet-Fahrzeuges ausgebildet ist. Das Dach 2 weist dabei ein sich zwischen einem Windschutzscheibenrahmen 3 und einen hinteren Dachbereich 4 mit einer Heckscheibe 5 erstreckendes Dachmittelteil 6 auf, das in eine Öffnungsstellung so verlagerbar ist, daß der Fahrzeuginnenraum 7 im Bereich der Dachkontur zwischen dem Windschutzscheibenrahmen 3 und dem hinteren Dachbereich 4 freigegeben wird.

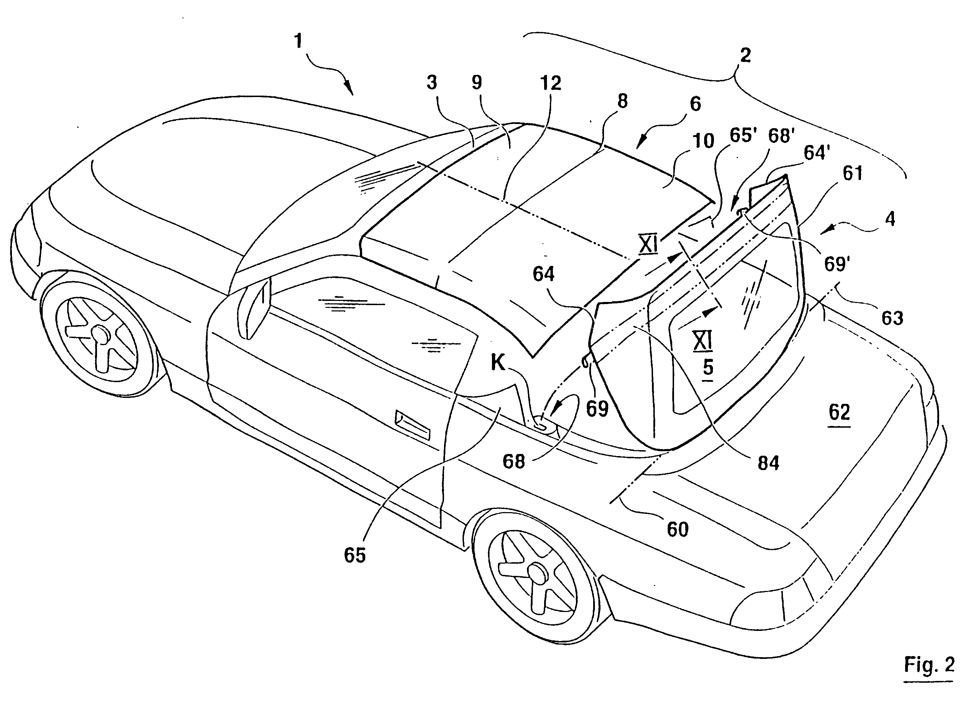

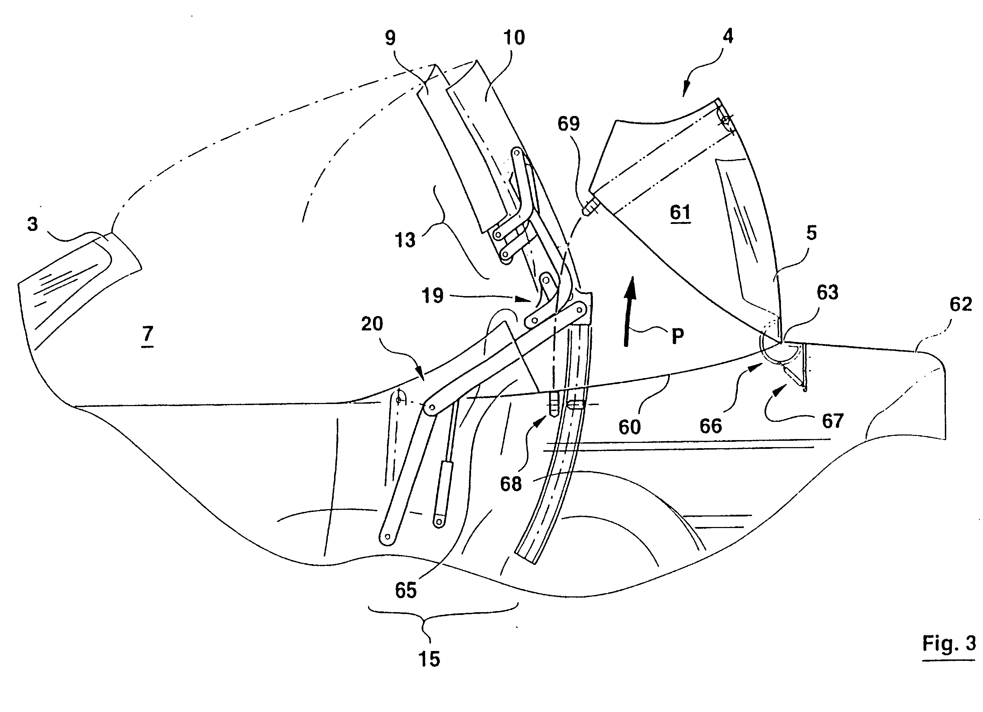

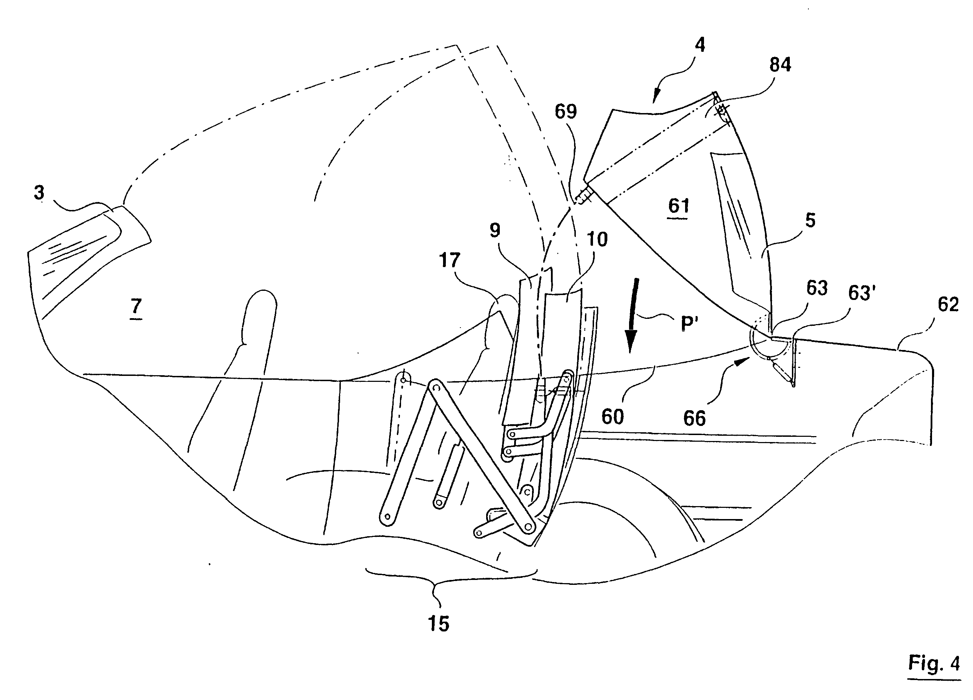

In der dargestellten Ausführungsform des Cabriolet-Fahrzeugs 1 ist das Dachmittelteil 6 aus zwei im Bereich einer Teilungsebene 8 aneinanderliegenden Dach-Teilstücken 9 und 10 gebildet. Diese Dach-Teilstücke 9, 10 sind über symmetrisch zu einer Fahrzeuglängsachse 12 (Fig. 2) angeordnete und jeweils randseitig angreifende Gelenkverbinder 13 verbunden, die ihrerseits mit einer am hinteren Dachteilstück 10 angreifenden Antriebseinheit 15 mit einem Schwenkantrieb 19 und einem Absenkantrieb 20 zusammenwirken. Die unterschiedlichen Bewegungsphasen des Dachmittelteils in Fig. 3 bis Fig. 5 verdeutlichen den Öffnungsvorgang des Daches 2, wobei das zweiteilige Dachmittelteil 6 nach Erreichen der Öffnungsstellung bis hinter die Fondsitze 17 abgesenkt ist (Fig. 4).

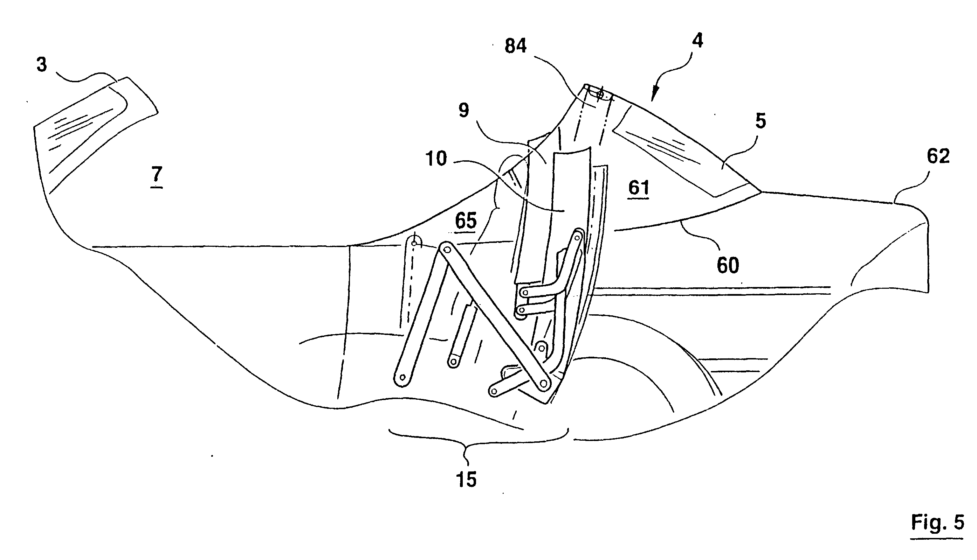

Bei dem Cabriolet-Fahrzeug 1 erfindungsgemäßer Ausbildung ist der rückwärtige Dachbereich 4 als ein Dachschalenteil 61 vorgesehen, das auch bei in Öffnungsstellung (Fig. 5) befindlichem Dachmittelteil 6 oberhalb einer Fahrzeugbrüstungslinie 60 verbleibt und eine heckseitige Begrenzung bildet.

Dieses Dachschalenteil 61 kann, beispielsweise bei einem viersitzigen Cabriolet-Fahrzeug, als eine starr mit der Fahrzeugkarosserie verbundene Baugruppe (nicht dargestellt) ausgebildet sein und das mit dieser Baugruppe das Fahrzeugdach 2 bildende Dachmittelteil 6 kann dabei in einer weiteren denkbaren Ausführungsform als ein Soft-Top vorgesehen sein, das über ein entsprechendes Schwenkgestänge karosserieseitig abgestützt ist.

Das Dachschalenteil 61 ist in der dargestellten Ausführungsform (Fig. 2) als schwenkbeweglich an der Fahrzeugkarosserie abgestützte Baugruppe vorgesehen, wobei diese eine im Nahbereich des Kofferraumdeckels 62 befindliche Schwenkachse 63 definiert, derart, daß das Dachschalenteil 61 entgegen der Fahrtrichtung in eine Öffnungsstellung (Pfeil P, Fig. 3) hochschwenkbar bzw. bei umgekehrtem Bewegungsablauf in die jeweilige Schließstellung rückschwenkbar (Pfeil P', Fig. 4) ist.

Die perspektivische Heckansicht des Fahrzeugs 1 gemäß Fig. 2 verdeutlicht, daß das schwenkbare Dachschalenteil 61 eine im wesentlichen U-förmige Schließkontur bildet und jeweilige vordere Seitenränder 64, 64' in Schließstellung an einem karosseriefesten Brüstungsteil 65, 65' anliegen.

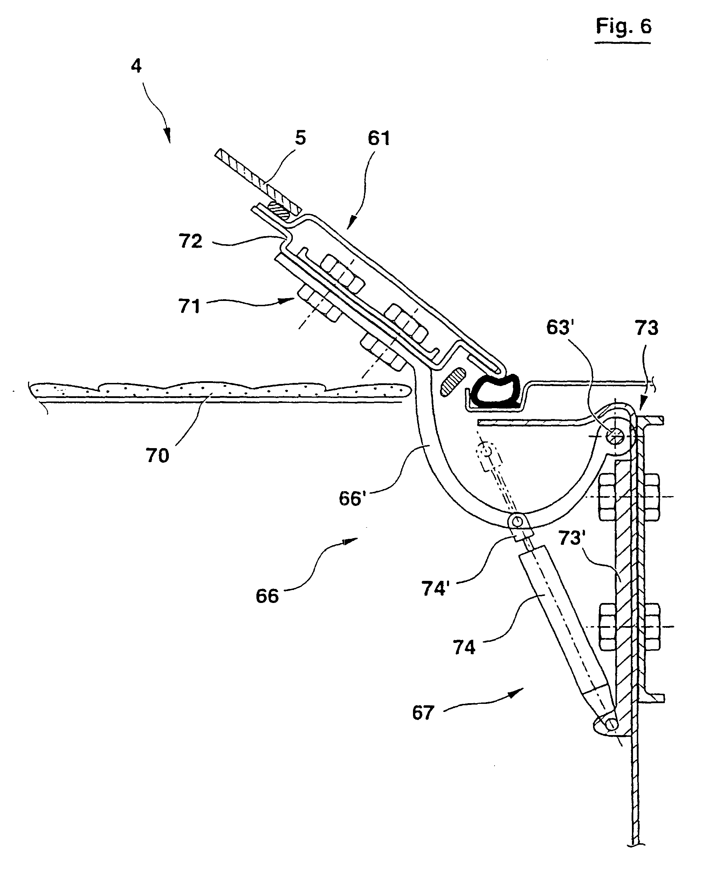

Das Dachschalenteil 61 ist im Bereich der Schwenkachse 63 mit einem Schwenkscharnier 66 (Fig. 6) versehen, das über ein Antriebsorgan 67 automatisch steuerbar ist, so daß das Dachschalenteil 61 aus den im vorderen Bereich der Seitenränder 64, 64' bzw. karosserieseitig im Nahbereich der Brüstungsteile 65, 65' vorgesehenen Teile der Rasthalterungen 68, 68' gelöst und in die Öffnungsstellung (Fig. 2) hochschwenkbar ist. Beim Schließvorgang (Pfeil P', Fig. 4) werden jeweilige Rastansatzteile 69, 69' nach einer Einführung in einer karoserieseitigen Öffnung K verriegelt und so das Dachschalenteil 61 in der Schließstellung karosserieseitig festgelegt.

In Fig. 6 verdeutlicht eine vergrößerte Ausschnittsdarstellung die Ausbildung des Dachschalenteils 61 mit dem einerseits eine Hutablage 70 unterhalb von Verbindungsteilen 71 in Form von Schrauben mit einer Halteplatte 72 durchgreifenden und andererseits über Halteteile 73 karosserieseitig abgestützten Schwenkscharnier 66, das einen als Antriebsorgan 67 vorgesehenen Hydraulikzylinder 74 aufweist. Der Hydraulikzylinder 74 ist dabei im Bereich einer Stützplatte 73 stabil abgestützt und die Kolbenstange 74' greift am Schwenkscharnier 66 an einem Schwenkhebel 66' an, der karosserieseitig ein Schwenkgelenk 63' aufweist. Mit diesem Schwenk-Stützsystem kann das Dachschalenteil 61 mit geringem konstruktivem Aufwand in die vorbeschriebene Öffnungs- bzw. Schließstellung geschwenkt werden.

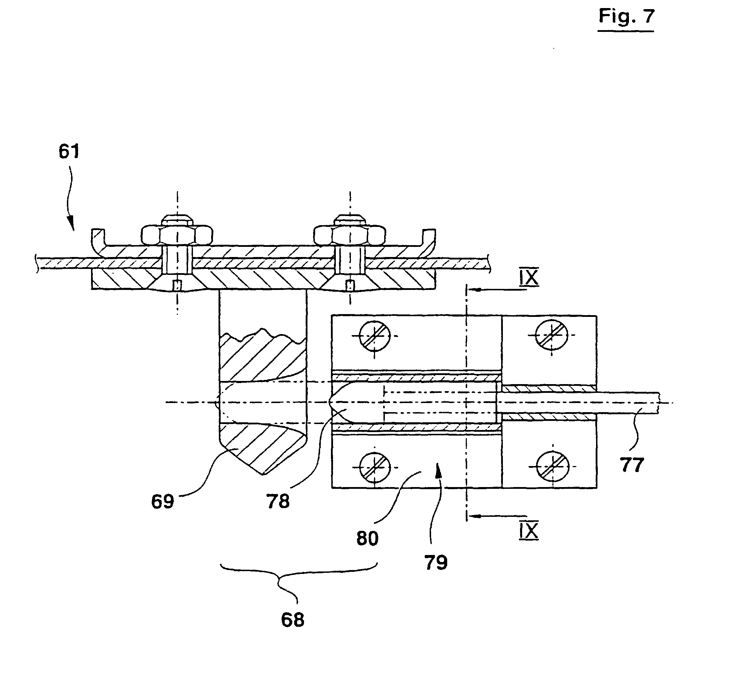

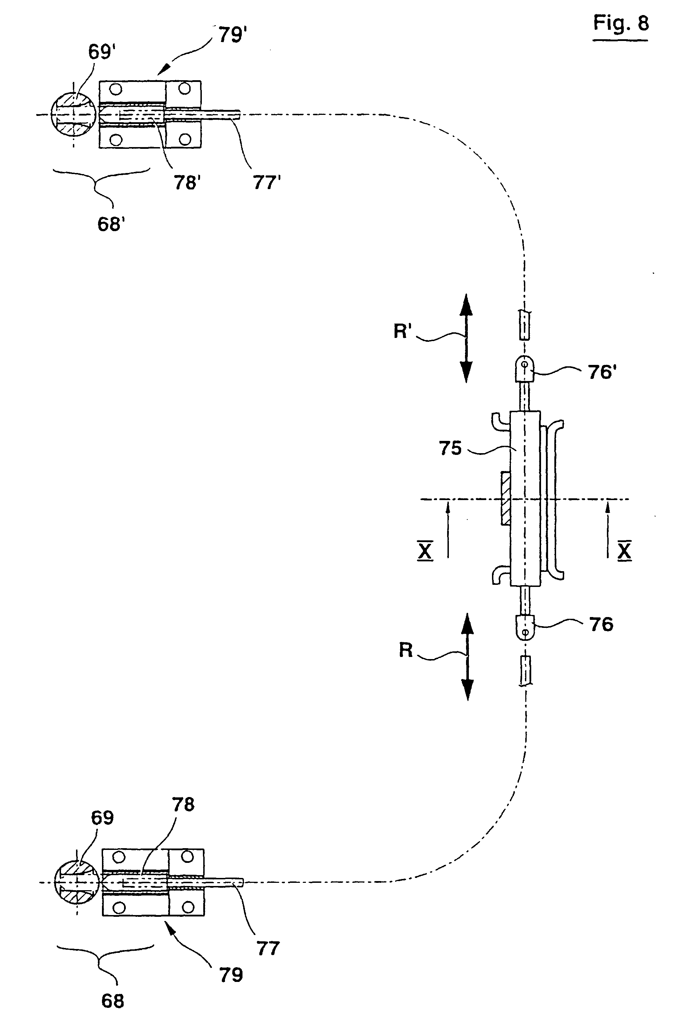

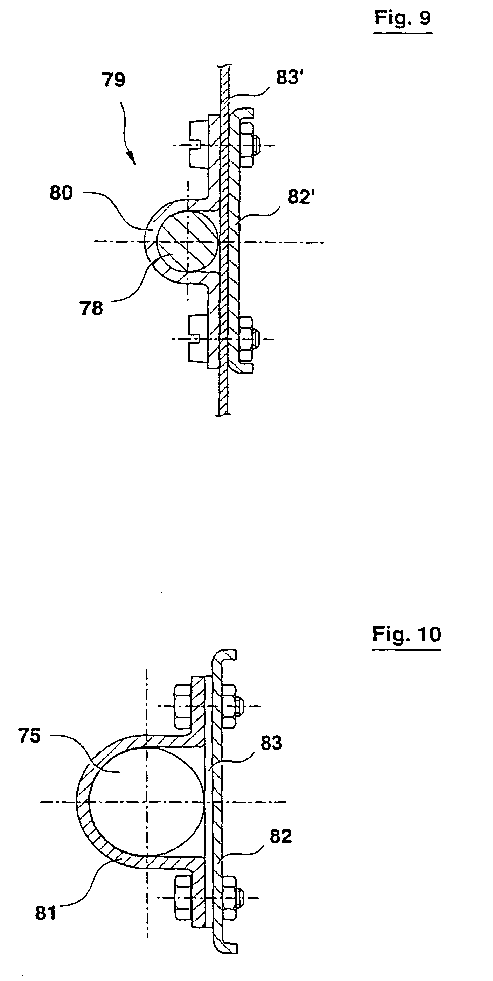

Die Einzeldarstellung gemäß Fig. 7 verdeutlicht in Zusammenschau mit dem Übersichtsbild gemäß Fig. 8 eine zweckmäßige konstruktive Ausbildung der Rasthalterungen 68, 68' zur karosserieseitigen Festlegung des Dachschalenteils 61. Dabei ist ein im heckseitigen Bereich des Fahrzeugs abgestütztes Antriebsorgan in Form eines Hydraulikzylinders 75 (Fig. 8) vorgesehen, der zwei in Pfeilrichtung R, R' wirksame Kolbenstangen 76, 76' aufweist, die über jeweilige als Zug-Druckteile wirksame Bowdenzüge 77, 77' mit Verriegelungsbolzen 78, 78' im Bereich karosserieseitiger Führungsteile 79, 79' verbunden sind. Über eine entsprechende Bewegung der Verriegelungsbolzen 78, 78' unter Wirkung des Hydraulikzylinders 75 bzw. dessen in Pfeilrichtung R, R' wirksame Kolbenstange 76, 76' können die Verriegelungsbolzen 79, 79' in eine Durchgangsöffnung der Rastansatzteile 69, 69' eingeführt und damit das Dachschalenteil 61, verriegelt werden. In der Darstellung gemäß Fig. 7 ist mit einer Strich-Punkt-Darstellung der Verbindungseingriff im Bereich der Rasthalterung 68 verdeutlicht und die Schnittdarstellung gemäß Fig. 9 zeigt den Verriegelungsbolzen 78 im Querschnitt, wobei dieser in zweckmäßiger Ausführung über eine karosserieseitig verschraubte Führungsschelle 80 gleitbeweglich an dem Führungsbauteil 79 gehalten ist.

Die Schnittdarstellung gemäß Fig. 10 verdeutlicht die Festlegung des Antriebs-Hydraulikzylinders 75 mittels einer Halteschelle 81 und eines Gegengliedes 82 an der Rückwand 83 der Fahrzeugkarosserie.

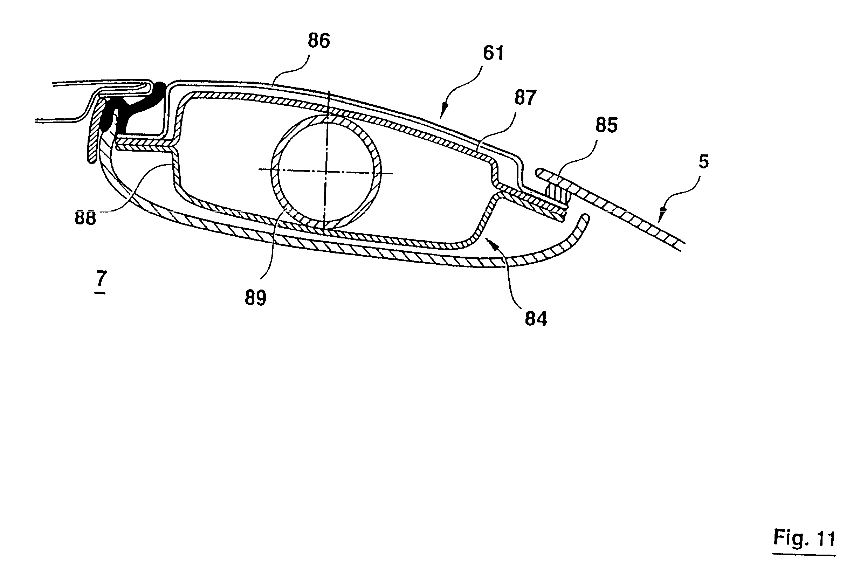

Das Dachschalenteil 61 ist in der Darstellung gemäß Fig. 2 in Zusammenschau mit Fig. 11 verdeutlicht, wobei eine unterbrochene Linie die vorteilhafte Ausbildung des Dachschalenteils 61 mit einem in dessen Kontur integrierten Überrollbügel 84 zeigt, der sich quer zur Fahrzeuglängsachse 12 zwischen den am vorderen Seitenrand 64, 64' vorgesehenen Teilen der Rasthalterungen 68, 68' erstreckt.

In der Schließstellung des Dachschalenteiles 61 ist dieser integrierte Überrollbügel 84 sowohl bei geschlossener Fahrweise (Fig. 1) als auch bei geöffneter Fahrweise (Fig. 5) des Fahrzeugs 1 als ein zusätzliches Schutzelement für die im Fahrzeuginnenraum 7 befindlichen Insassen vorgesehen. Der integrierte Überrollbügel 84 bewirkt im Verlauf seiner Einbaukontur eine Aussteifung des Dachschalenteils 61 oberhalb der Heckscheibe 5, so daß damit insbesondere die bei einem Überrollunfall auftretenden Belastungen des Dachschalenteils 61 im oberen Randbereich aufgenommen werden und diese Belastungen über die karosserieseitigen Verbindungsbereiche des Überrollbügels 84 in die Fahrzeugkarosserie nach Art eines Aufprallschutzes ableitbar sind.

Die Querschnittsdarstellung des Dachschalenteils 61 im Bereich des Überrollbügels 84 gemäß Fig. 11 verdeutlicht, daß der Überrollbügel 84 mit im Nahbereich des Heckscheibenrandes 85 einen Dachhautbereich 86 des Dachschalenteils 61 untergreifenden U-Profilteilen 87, 88 versehen ist und zwischen diesem ein Verstärkungsrohr 89 verläuft. Zum Fahrzeuinnenraum 7 hin ist der Überrollbügel 84 über ein Verkleidungsteil 90 abgedeckt.

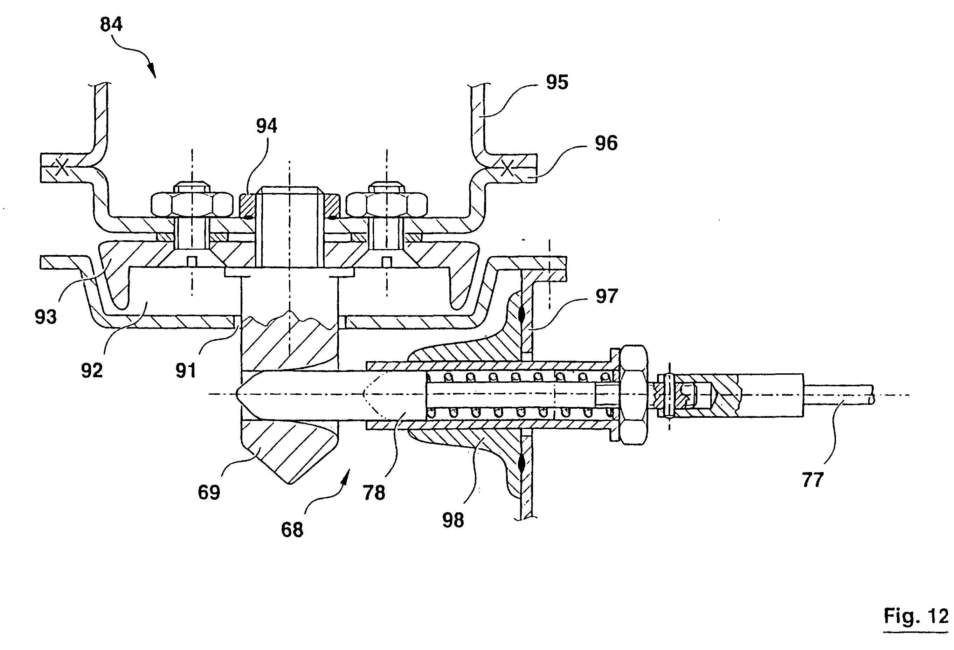

In Fig. 12 ist die karosserieseitige Abstützung des Dachschalenteils 61 mit Überrollbügel 84 im seitlichen Bereich der Rasthalterungen 68, 68' in einer Darstellung ähnlich Fig. 7 veranschaulicht, wobei über zusätzliche Stützteile die Stabilität zur karosserieseitigen Ableitung von Aufprallkräften erhöht ist. Der Überrollbügel 84 durchgreift mit dem jeweiligen Rastansatzteil 69 eine Durchlaßöffnung 91 im Bereich einer
Karosserieformmulde 92, in der ein endseitig am Überrollbügel 84 befindliches Gegenglied 93 lagegenau so positioniert ist, daß der Überrollbügel 84 insbesondere auch bei hohen Druck- und/oder Querkraftbelastungen in seiner funktionalen Einbaulage verbleibt. Über eine Schweißmutter 94 und ein Verstärkungsteil 95 mit Halteplatte 96 ist das Gegenglied 93 stabil mit dem Überrollbügel 84 verbunden und die Verbindungsstabilität im Bereich des Verriegelungsbolzens 78 ist durch ein karosserieseitig über eine Stützplatte 97 festgelegtes Hülsenteil 98 verbesert.

## Patentansprüche

1. Cabriolet-Fahrzeug mit einem in Schließstellung am vorderen Windschutzscheibenrahmen (3) abgestützten und im wesentlichen waagerecht zu einem rückwärtigen Dachbereich (4) mit Heckscheibe (5) hin verlaufenden Dachmittelteil (6), das in eine den Fahrzeuginnenraum (7) bereichsweise freigebende Öffnungsstellung verlagerbar ist, wobei der rückwärtige Dachbereich (4) ein auch bei in Öffnungsstellung befindlichem Dachmittelteil (6) oberhalb der Fahrzeugbrüstungslinie (60) verbleibendes Dachschalenteil (61) ist, das als integrierter Überrollbügel (84) ausgebildet ist, **dadurch gekennzeichnet, daß** der Überrollbügel (84) von die Dachhaut (86) des Dachschalenteils (61) untergreifenden U-Profilteilen (87, 88) mit einem zwischenliegenden Verstärkungsrohr (89) gebildet ist.

2. Cabriolet-Fahrzeug nach Anspruch 1, **dadurch gekennzeichnet, daß** das Dachschalenteil (61) starr mit der Fahrzeugkarosserie verbunden ist.

3. Cabriolet-Fahrzeug nach Anspruch 1, **dadurch gekennzeichnet, daß** das Dachschalenteil (61) schwenkbeweglich mit der Fahrzeugkarosserie verbunden ist.

4. Cabriolet-Fahrzeug nach Anspruch 3, **dadurch gekennzeichnet, daß** das Dachschalenteil (61) eine im Nahbereich des Kofferraumdeckels (62) befindliche Schwenkachse (63; 63') definiert, derart, daß das Dachschalenteil (61) entgegen der Fahrtrichtung in eine Öffnungsstellung hochschwenkbar ist.

5. Cabriolet-Fahrzeug nach Anspruch 3 oder 4, **dadurch gekennzeichnet, daß** das schwenkbare Dachschalenteil (61) eine im wesentlichen U-förmige Schließkontur bildet und jeweilige vordere Seitenränder (64, 64') in Schließstellung an einem karosseriefesten Brüstungsteil (65, 65') anliegen.

6. Cabriolet-Fahrzeug nach einem der Ansprüche 3 bis 5, **dadurch gekennzeichnet, daß** das Dachschalenteil (61) unterhalb der Heckscheibe (5) mit zumindest einem ein Antriebsorgan (67) aufweisenden und mit im Bereich der vorderen Seitenränder (64, 64') vorgesehenen Rasthalterungen (68, 68') zusammenwirkenden Schwenkscharnier (66) versehen ist.

7. Cabriolet-Fahrzeug nach einem der Ansprüche 1 bis 6, **dadurch gekennzeichnet, daß** der Überrollbügel (84) im Nahbereich des Heckscheibenrandes (85) die Dachhaut (86) des Dachschalenteils (61) untergreift.

8. Cabriolet-Fahrzeug nach einem der Ansprüche 1 bis 7, **dadurch gekennzeichnet, daß** der Überrollbügel (84) an seinen jeweiligen Längsenden über seitliche Stützteile (69, 78, 92, 93, 96, 97) mit der Fahrzeugkarosserie verbunden ist.

9. Cabriolet-Fahrzeug nach einem der Ansprüche 1 und 3 bis 8 mit einem schwenkbaren Dachschalenteil, **dadurch gekennzeichnet, daß** der in dem Dachschalenteil (61) befindliche Überrollbügel (84) im Bereich seiner seitlichen Stützteile (69, 78) die Rasthalterung (68, 68') bildet.

## Claims

1. Convertible car with a roof centre section (6) supported on the front windscreen frame (3) in the closed position and running mainly horizontally to a rearward roof section (4), with a rear window (5), which can be moved to an open position which exposes areas of the cabin (7), in which context the rearward roof section (4) is a roof shell section (61) which remains above the vehicle's bodyline (60) even with roof centre section (6) in the open position, which is configured as a roll bar (84), **characterised in that** roll bar (84) is configured by channel sections (87, 88) which from below grips roof skin (86) of roof shelf section (61) and which has an intermediate reinforcement tube (89).

2. Convertible car according to claim 1, **characterised in that** roof section (61) has a rigid connection with the vehicle's body.

3. Convertible car according to claim 1, **characterised in that** roof shell section (61) is connected with the vehicle body such as to allow a pivotal movement.

4. Convertible car according to claim 3, **characterised in that** roof section (61) defines a pivotal axis (63; 63') located in the vicinity of boot lid (62), such that roof shell section (61) can be pivoted up to an open position against the direction of drive.

5. Convertible car according to claims 3 or 4, **characterised in that** pivoting roof shell section (61) configures a mainly channel-sectioned closing contour and its front lateral edges (64, 64') in the closed position rest on a fixed body section on the top of the body line (65, 65').

6. Convertible car according to one of claims 3 to 5 **characterised in that** roof shell section (61) is equipped, below rear window (5), with at least one pivotal hinge (66) which exhibits a drive component (67) and which interacts with engagement fittings (68, 68') which are provided in the area of the front lateral edges (64, 64').

7. Convertible car according to one of claims 1 to 6, **characterised in that** roll bar (84) grips roof skin (86) of roof shell section (61) in the vicinity of rear-window edge (85).

8. Convertible car according to one of claims 1 to 7, **characterised in that** roll bar (84) is connected with the vehicle's body on its respective longitudinal ends by means of lateral struts (69, 78, 92, 93,96, 97).

9. Convertible car according to one of daims 1 and 3 to 8 with a pivoting roof shell section **characterised in that** the roll bar (84) located in roof shell section (61) configures the engagement fitting (68, 68') in the area of its lateral struts (69, 78).

## Revendications

1. Véhicule convertible
dans lequel
- une partie centrale de toit, qui s'appuie en position de fermeture sur le cadre avant (3) du pare-brise et s'étend à peu près horizontalement jusqu'à une zone arrière de toit (4) comprenant la lunette (5), peut se déplacer pour prendre une position d'ouverture libérant en partie l'habitacle (7) du véhicule,
- la zone arrière (4) du toit est constituée par une partie de coquille de toit (61) qui demeure au-dessus de la ligne de ceinture (60) du véhicule même quand la partie centrale de toit (6) est en position d'ouverture, et qui intègre un arceau (84) de protection contre les tonneaux,
**caractérisé en ce que**
l'arceau (84) de protection contre les tonneaux est constitué par des parties de profilé en U (87, 88) entre lesquelles se trouve un tube de renforcement (89) et qui sont en prise par dessous avec la peau (88) de la partie de coquille de toit (61).

2. Véhicule convertible selon la revendication 1,
**caractérisé en ce que**
la partie de coquille de toit (61) est reliée rigidement à la carrosserie du véhicule.

3. Véhicule convertible selon la revendication 1,
**caractérisé en ce que**
la partie de coquille de toit (61) est reliée, en pouvant basculer, à la carrosserie du véhicule.

4. Véhicule convertible selon la revendication 3,
**caractérisé en ce que**
la partie de coquille de toit (61) définit un axe de basculement (63), proche du couvercle du coffre (62) de manière que cette partie (61) peut être relevée, par basculement dans le sens inverse à la marche du véhicule, pour venir dans une position d'ouverture.

5. Véhicule convertible selon l'une quelconque des revendications 3 ou 4,
**caractérisé en ce que**
la partie de coquille de toit (61), basculante, présente un contour de fermeture ayant essentiellement la forme d'un U, avec des bords latéraux (64, 64') en avant qui, en position de fermeture reposent sur des parties de ceinture (65, 65') solidaire de la carrosserie.

6. Véhicule convertible selon l'une quelconque des revendications 3 à 5,
**caractérisé en ce que**
la partie de coquille de toit (61) comporte, en dessous de la lunette arrière (5) au moins une charnière de basculement (6) présentant un organe d'entrainement (67) et coopérant avec des fixations d'accrochage (68, 68') prévus vers les bords latéraux avant (64, 64').

7. Véhicule convertible selon l'une quelconque des revendications 1 à 6,
**caractérisé en ce que**
près du bord (85) de la lunette arrière l'arceau (84) de protection contre les tonneaux est en prise par dessous avec la peau de la partie de coquille de toit (61).

8. Véhicule convertible selon l'une quelconque des revendications 1 à 7,
**caractérisé en ce que**
l'arceau de protection (84) est, à chacune de ses extrémités, relié à la carrosserie du véhicule par des parties latérales de soutien (69, 78, 92, 93, 96, 97).

9. Véhicule convertible selon l'une quelconque des revendications 1 et 3, à 8, équipé dune partie basculante de coquille de toit,
**caractérisé en ce que**
l'arceau de protection (84) logé dans cette partie de coquille de toit (61) constitue, dans les zones de ses parties latérales de soutien (69, 78) les fixations d'accrochage (68, 68').
